# EUROPÄISCHE PATENTSCHRIFT

(11) **EP 2 905 506 B1**
(45) Veröffentlichungstag und Bekanntmachung des Hinweises auf die Patenterteilung: **14.08.2019**
(21) Anmeldenummer: 14192747.5
(22) Anmeldetag: 12.11.2014
(51) Int. Cl.: A01D 69/00, F16H 37/08

(54) **Mähdrescher und Planetengetriebe dafür**
Combine harvester and planetary gear for same
Moissonneuse-batteuse et son engrenage épicycloïdal

(30) Priorität: 10.02.2014 DE 102014001610
(43) Veröffentlichungstag der Anmeldung: 12.08.2015
(73) Patentinhaber: CLAAS Selbstfahrende Erntemaschinen GmbH, 33428 Harsewinkel (DE)
(72) Erfinder: Knierbein, Claudius, 59510 Lippetal-Herzfeld (DE)
(74) Vertreter: CLAAS Gruppe

(56) Entgegenhaltungen:
- EP-A1- 2 218 604
- EP-A2- 1 340 419
- DE-A1-102011 084 931
- DE-B1- 1 657 331
- DE-C- 680 351
- FR-A- 1 587 908
- GB-A- 1 575 969
- US-A- 2 077 387
- US-A- 2 137 778

## Beschreibung

Die vorliegende Erfindung betrifft ein Planetengetriebe sowie einen Mähdrescher, in dem ein solches Planetengetriebe verwendet wird.

EP2218604 offenbart die Merkmale des Oberbegriffes des Anspruchs 1.

Aus DE10 2011 114 627 A1 sind ein Planetengetriebe und ein Mähdrescher, in dem das Planetengetriebe zum Antreiben eines Dreschwerks eingesetzt wird, bekannt. Bei diesem herkömmlichen Planetengetriebe sind ein antriebsseitiges Sonnenrad, ein Hohlrad und ein abtriebsseitiger Planetenträger um eine gemeinsame Achse drehbar und über Planetenräder aneinander gekoppelt. In einem ersten Schaltzustand des Planetengetriebes ist das Hohlrad drehfest gehalten, und das antriebsseitig gelegene Sonnenrad treibt eine Drehung des mit einer Abtriebswelle fest verbundenen Planetenträgers mit einer niedrigeren Drehzahl als der des Sonnenrades an. In einem zweiten Schaltzustand ist die Blockade des Hohlrades aufgehoben, und eine Schaltmuffe ist in eine Stellung verschoben, in der sie das Sonnenrad und den Planetenträger starr aneinander koppelt. Das Hohlrad rotiert in dieser Schaltstellung mit den verblockten Sonnen- und Planetenrädern mit, und die Übersetzung des Getriebes ist 1. Da im ersten Schaltzustand die Schaltmuffe mit dem Planetenträger rotiert, ist die hydraulische Ansteuerung der Schaltmuffe aufwändig. Für eine Betätigung von Hand ist der Sperrkörper nicht zugänglich.

Eine Aufgabe der vorliegenden Erfindung ist, ein Planetengetriebe bzw. einen Mähdrescher mit einem Planetengetriebe zu schaffen, das eine vereinfachte Verstellung der Übersetzung, egal ob von Hand oder durch einen Aktuator, ermöglicht.

Die Aufgabe wird gelöst, indem bei einem Planetengetriebe mit einer Welle, einem ersten Sonnenrad, einer Schaltmuffe, die in einer ersten Stellung das erste Sonnenrad an die Welle koppelt und in einer zweiten Stellung eine Drehung des ersten Sonnenrades gegen die Welle zulässt, und mehreren Planetenrädern, die mit dem ersten Sonnenrad und einem zweiten Rad kämmen, in der zweiten Stellung die Schaltmuffe das zweite Rad an die Welle koppelt. Wenn das erste Sonnenrad einen Eingang des Planetengetriebes und die Welle einen Ausgang bildet, dann ist in der ersten Stellung das Getriebe verblockt, und Ein- und Ausgang rotieren mit gleicher Drehzahl, wohingegen in der zweiten Stellung der Schaltmuffe Drehmoment vom ersten Sonnenrad über die Planetenräder auf das zweite Rad übertragen wird und eine von 1 verschiedene Übersetzung möglich ist. Wenn hingegen das zweite Rad einen Eingang und die Welle einen Ausgang des Getriebes bildet, dann ist in der zweiten Stellung der Schaltmuffe das Getriebe verblockt, wohingegen in der ersten Stellung eine von eins verschiedene Übersetzung möglich ist. Umgekehrt kann natürlich auch die Welle einen Eingang und das erste Sonnenrad oder das zweite Rad einen Ausgang des Getriebes bilden.

Im einen wie im anderen Falle ist für das Funktionieren des Getriebes nicht erforderlich, dass die Achsen der Planetenräder um die Welle rotieren. Ein Planetenträger kann daher drehfest angeordnet sein.

Ein solcher drehfester Planetenträger bietet sich an, um eine an der Schaltmuffe angreifende Schaltgabel daran axial beweglich anzubringen. Da die Schaltgabel nicht mit der Schaltgabel rotiert, ist sie, auch wenn sie manuell betätigt werden muss, leicht zu finden.

Wenn die Schaltgabel durch einen Aktuator betätigt wird, kann dieser wie die Schaltgabel ortsfest am Planetenträger angebracht sein. Dies ermöglicht eine vereinfachte Versorgung des Aktuators mit Antriebsenergie, insbesondere in Form von Druckfluid, da keinerlei Drehdurchführungen benötigt werden.

Am Planetenträger können Rastmittel zum lösbaren Verrasten der Schaltgabel in einer der ersten und/oder der zweiten Stellung der Schaltmuffe entsprechenden Position vorgesehen sein, um die Schaltmuffe in ihrer ersten oder zweiten Stellung auch dann zu sichern, wenn kein Aktuator vorgesehen oder der Aktuator nicht mit Antriebsenergie versorgt ist.

Da der Planetenträger bei laufendem Getriebe nicht mit rotiert, kann er zweckmäßigerweise, ggf. zusammen mit anderen Gehäuseteilen, eine Ölwanne bilden, in die wenigstens eines der Planetenräder eintaucht. Durch Eintauchen des rotierenden Planetenrades in das Öl der Wanne kann ein Ölnebel erzeugt werden, der sich im Getriebe verteilt und für eine ausreichende Schmierung auch an nicht in das Öl eintauchenden Stellen des Getriebes sorgt.

Insbesondere kann der Planetenträger schalenförmig ausgebildet sein und die Ölwanne zusammen mit einem an einen Rand der Schale anschließenden Deckel bilden.

Üblicherweise sind die Achsen der Planetenräder auf einem Kreis um die Achse des Sonnenrades angeordnet. Wenn der Planetenträger drehfest ist, sind diese Achsen unbeweglich. Eines der Planetenräder sollte daher, um möglichst tief in das Öl einzutauchen, seine Achse am tiefsten Punkt des Kreises haben.

Planetenträger und Deckel können zusammen eine Kapsel bilden, die die Sonnen- und Planetenräder des Getriebes umschließt.

Die Kapsel kann eine Öffnung aufweisen, an der ein sich in axialer Richtung erstreckender Stift der Schaltgabel herausgeführt ist. Die Öffnung kann einerseits dazu dienen, die Schaltgabel in axialer Richtung zu führen; anhand des herausgeführten Endes des Stifts ist ferner von außen erkennbar, in welcher Stellung die Schaltmuffe sich befindet, und durch Zugreifen auf den Stift kann, wenn erforderlich, auch von Hand Einfluss auf die Stellung der Schaltmuffe genommen werden.

Die Schaltmuffe erstreckt sich vorzugsweise um die Welle herum, und Schaltmuffe und Welle weisen ineinandergreifende Verzahnungen auf, die in axialer Richtung gegeneinander verschiebbar sind, um eine Verstellung der Schaltmuffe zwischen der ersten und der zweiten Position zu ermöglichen.

In der ersten Stellung kann das zweite Rad gegen die Welle drehbar sein.

Vorzugsweise ist das zweite Rad ebenfalls ein Sonnenrad, und die Planetenräder sind Stufenräder mit einer mit dem ersten Sonnenrad kämmenden ersten Verzahnung und einer mit dem zweiten Rad kämmenden zweiten Verzahnung.

Die Aufgabe wird ferner gelöst durch einen Mähdrescher mit einem Planetengetriebe wie oben beschrieben.

Vorzugsweise dient das Planetengetriebe in dem Mähdrescher zum Antreiben eines Dreschwerks.

Wenn das Planetengetriebe einen Aktuator aufweist, kann ein Bedienelement zum Ansteuern des Aktuators an einem Fahrerstand des Mähdreschers vorgesehen sein, um dem Fahrer ein Umschalten der Übersetzung zu ermöglichen, ohne dafür den Fahrerstand zu verlassen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht eines Mähdreschers mit einem Planetengetriebe gemäß der vorliegenden Erfindung;
- Fig. 2: einen axialen Schnitt durch das Planetengetriebe gemäß einer ersten Ausgestaltung; und
- Fig.3: einen partiellen axialen Schnitt durch das Planetengetriebe gemäß einer zweiten Ausgestaltung.

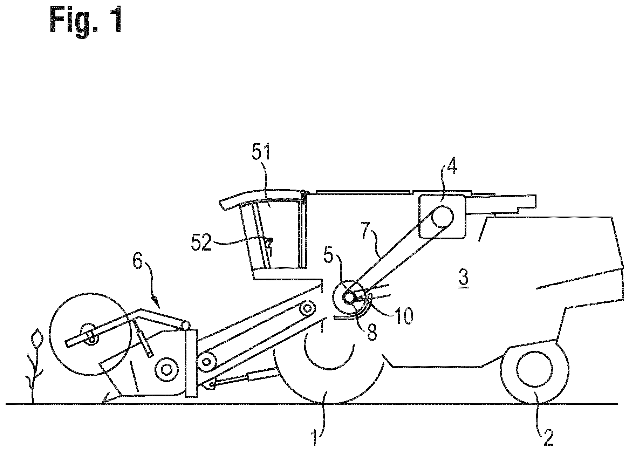

Der in Fig. 1 gezeigte Mähdrescher hat in an sich bekannter Weise ein Fahrgestell mit vorderen Rädern 1 und lenkbaren hinteren Rädern 2 sowie eine auf dem Fahrgestell montierte Karosserie 3, in der ein Motor 4, üblicherweise ein Dieselmotor, eine Dreschtrommel 5 sowie diverse Aggregate zur Weiterverarbeitung von aus der Dreschtrommel ausgeschiedenem Erntegut untergebracht sind. Diese Aggregate können von beliebiger herkömmlicher Art sein und sind daher in der Figur nicht dargestellt und im Folgenden auch nicht weiter beschrieben. Das Erntegut ist der Dreschtrommel 5 von einem austauschbar vorne an der Karosserie 3 montierten Erntevorsatz 6 zugeführt. Die Figur zeigt als Erntevorsatz 6 ein Getreideschneidwerk; dieses kann nach Bedarf gegen einen an eine andere Art Erntegut angepassten Erntevorsatz ausgetauscht werden.

Ebenfalls in Anpassung an das Erntegut und dessen Eigenschaften ist das Übersetzungsverhältnis zwischen dem Motor 4 und der vom Motor 4 über einen Riemen 7 angetriebenen Dreschtrommel 5 veränderbar. Im einfachsten Fall ist zum Verändern des Übersetzungsverhältnisses zwischen einer zur Dreschtrommel 5 koaxialen Riemenscheibe 8 und der Dreschtrommel 5 ein Planetengetriebe 10 vorgesehen; um das Übersetzungsverhältnis in weiten Bereichen und kontinuierlich variieren zu können, kann das Planetengetriebe 10 mit einem Variatorgetriebe kombiniert sein, wie aus DE 195 21 486 A1 bekannt.

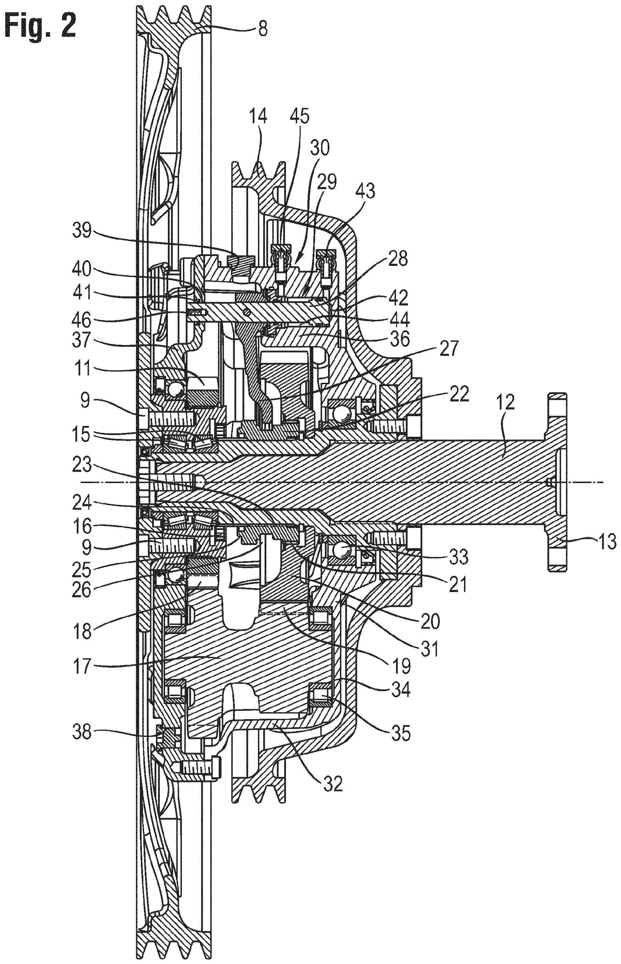

Fig. 2 zeigt das Planetengetriebe 10 in einem axialen Schnitt. Die antriebsseitige Riemenscheibe 8 ist durch Schrauben 9 drehfest mit einem Sonnenrad 11 des Planetengetriebes 10 verbunden. Durch eine zentrale Bohrung der Riemenscheibe 8 und des Sonnenrades 11 erstreckt sich eine Welle 12, die an der der Riemenscheibe 8 gegenüberliegenden Seite aus dem Planetengetriebe 10 herausragt und einen Flansch 13 zur Verbindung mit (in Fig. 2 nicht dargestellten) Dreschtrommel 5 trägt. Eine zweite Riemenscheibe 14, über die andere Komponenten des Dreschwerks antreibbar sind, ist an der Welle 12 verschraubt.

Die Einheit aus Riemenscheibe 8 und Sonnenrad 11 ist an der Welle 12 mithilfe von Wälzlagern 15 drehbar gelagert. An einer von der Riemenscheibe 8 abgewandten Stirnseite des Sonnenrades 11 ist eine Aussparung gebildet, in der sich eine Innenverzahnung 16 rings um die Welle 12 erstreckt.

Rings um die Welle 12 sind mehrere Planetenräder 17, typischerweise drei Stück, verteilt, von denen eines in Fig. 2 in einem axialen Schnitt zu sehen ist. Die Planetenräder 17 sind Stufenräder mit einer ersten Verzahnung 18, die mit dem Sonnenrad 11 kämmt, und einer zweiten Verzahnung 19, deren Durchmesser kleiner ist als der der ersten Verzahnung 18 und die mit einem hier ebenfalls als Sonnenrad ausgebildeten zweiten Rad 20 kämmen.

Das zweite Rad 20 weist ebenfalls an einer dem Sonnenrad 11 zugewandten Stirnseite eine Aussparung mit einer rings um die Welle 12 verlaufenden Innenverzahnung 21 auf. In der in Fig. 2 gezeigten Konfiguration ist das zweite Rad 20 drehfest mit der Welle 12 durch eine Schaltmuffe 22 verbunden, die an ihrer Außenseite in die Innenverzahnung 21 eingreifende Zähne trägt und an ihrer Innenseite eine Innenverzahnung 23 aufweist, in welche Zähne 24 der Welle 12 eingreifen, so dass die Schaltmuffe 22 an der Welle 12 drehfest aber axial beweglich gehalten ist.

Die Schaltmuffe 22 hat an ihrer Außenseite, zwischen den in die Innenverzahnung 21 des zweiten Rades 20 eingreifenden Zähnen und diesen gegenüberliegenden, dem Sonnenrad 11 zugewandten Zähnen 25 eine umlaufende Nut 26, in die auf einem Teil ihres Umfangs eine Schaltgabel 27 eingreift. Die Schaltgabel 27 ist befestigt an einer Kolbenstange 28 eines Stellzylinders 29, der in einem die Achsen der Planetenräder 17 festlegenden Planetenträger 30 ausgespart ist.

Der Stellzylinder 29 hat eine erste Arbeitskammer 42, die über eine erste Versorgungsleitung 43 mit Hydrauliköl beaufschlagbar oder entleerbar ist, und eine zweite Arbeitskammer 44, die über eine Versorgungsleitung 45 gespeist ist. In den Figuren nicht dargestellte Ventile, die die Versorgungsleitungen 43, 45 mit einer Pumpe bzw. einem Tank verbinden, sind durch in einem Fahrerstand 51 (s. Fig. 1) des Mähdreschers angeordnete Bedienelemente 52 gesteuert.

Der Planetenträger 30 hat hier im Wesentlichen die Gestalt einer flachen Schale mit einem Boden 31 und einer rings um den Boden 31 umlaufenden äußeren Wand 32, wobei in einer zentralen Öffnung des Bodens 31, gehalten durch ein Wälzlager 33, die Welle 12 aufgenommen ist, und auf einem Kreis um die Welle 12 herum verteilte Vertiefungen 34 im Boden 31 der Schale jeweils ein Wälzlager 35 und einen Achszapfen eines der Planetenräder 17 aufnehmen. Die Achse des einzigen in Fig. 2 sichtbaren Planetenrades 17 befindet sich am tiefsten Punkt des Kreises.

In einem in der Anordnung der Fig. 2 oberen Bereich des Planetenträgers 30 ist zwischen zwei jeweils außerhalb der Schnittebene angeordneten Planetenrädern 17 ein Vorsprung 36 gebildet, in welchem der Stellzylinder 29 ausgespart ist. Die umlaufende Wand 32 des Planetenträgers 30 ist mit einem Deckel 37 zu einem die Räder 11, 17, 20 und die Schaltmuffe 22 des Planetengetriebes dicht umschließenden Gehäuse verbunden. Das Gehäuse fungiert als Ölwanne, in der das in Fig. 2 im Schnitt gezeigte unterste Planetenrad 17 zum überwiegenden Teil in einem Ölbad untergetaucht ist. Der Deckel 37 weist an seinem unteren Rand eine durch einen Stopfen verschlossene Öffnung 38 auf, über die das Öl abgelassen werden kann; eine Nachfüllöffnung für das Öl ist in einem oberen Bereich des Deckels 37 angeordnet, aber in dieser Schnittdarstellung nicht dargestellt.

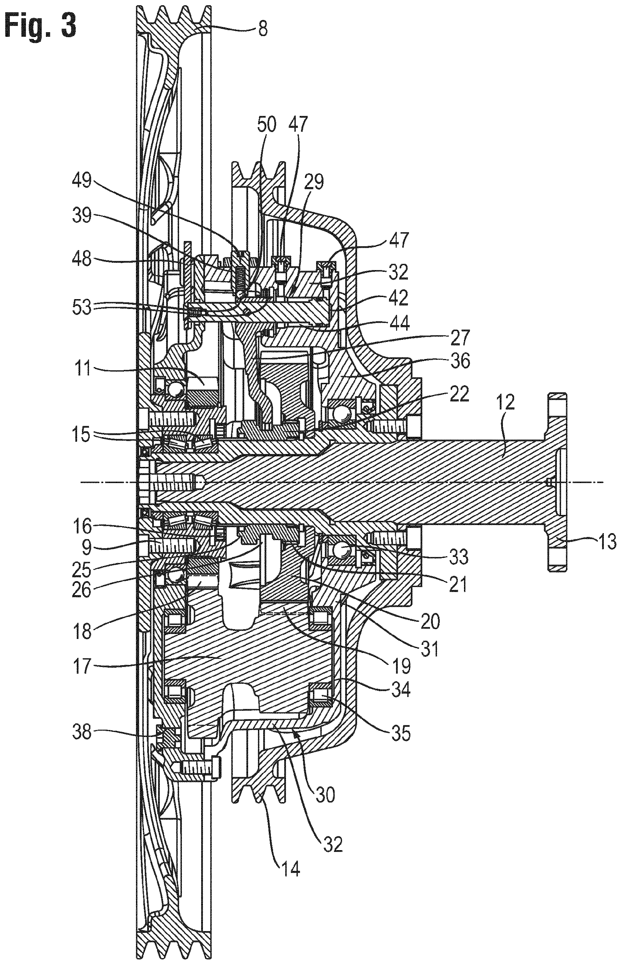

Eine Öffnung 39 in einem oberen Bereich der Wand 32 ist hier durch einen eingeschraubten Blindstopfen verschlossen; diese Öffnung 39 ist für eine nachfolgend mit Bezug auf Fig. 3 beschriebene Ausgestaltung der Erfindung von Belang.

Eine weitere Öffnung 40 des Deckels 37 liegt dem Stellzylinder 29 gegenüber und nimmt ein Ende der Kolbenstange 28 auf. Eine an dem Deckel 37 befestigte Dichtung 41 liegt an der Kolbenstange 28 an, um diese bei einer Bewegung zu führen und Öl abzustreifen, das sich, wenn das Getriebe in Bewegung ist, auf allen freiliegenden Oberflächen innerhalb des von Planetenträger 30 und Deckel 37 gebildeten Gehäuses verteilt.

Fig. 2 zeigt die Kolbenstange 28 in einer ersten Anschlagstellung, in der das Volumen der Arbeitskammer 42 des Stellzylinders 29 minimal und das der Arbeitskammer 44 maximal ist. In dieser Stellung koppelt die Schaltmuffe 22 das zweite Rad 20 an die Welle 12, so dass der Drehmomentfluss von der Riemenscheibe 8 über das Sonnenrad 11, die Planetenräder 17 und das zweite Rad 20 zur Welle 12 sowie zur Keilriemenscheibe 14 verläuft und die Übersetzung des Getriebes durch das Durchmesserverhältnis der Verzahnungen 18, 19 der Planetenräder 17 bestimmt ist.

Wenn die Arbeitskammer 42 über die Versorgungsleitung 43 mit Hydrauliköl beaufschlagt wird und Hydrauliköl aus der Arbeitskammer 44 über die Versorgungsleitung 45 abfließt, bewegt sich die Kolbenstange 28 in Fig. 2 nach links und nimmt dabei die Schaltgabel 27 mit. Die Schaltgabel 27 stößt gegen eine linke Flanke der Nut 26 und nimmt die Schaltmuffe 22 nach links mit. Dabei geht der Eingriff der Schaltmuffe 22 an der Innenverzahnung 21 des zweiten Rades 20 verloren, und die Schaltmuffe 22 gelangt in Eingriff an der Innenverzahnung 16 des Sonnenrades 11. Die Welle 12 ist nun direkt an die Riemenscheibe 8 gekoppelt, und die diversen ineinandergreifenden Verzahnungen des Planetengetriebes sind im Wesentlichen lastfrei. Angetrieben über das Sonnenrad 11 und die Planetenräder 17, rotiert das zweite Rad 20 leer mit einer anderen Drehzahl als derjenigen der Welle 12. Da auch in dieser Stellung der Schaltmuffe 22 die Planetenräder 17 weiter rotieren, ist eine kontinuierliche Zirkulation des Öls im Getriebe gewährleistet.

Um Reibung zwischen der Welle 12 und dem zweiten Rad 20 zu minimieren, wenn diese mit unterschiedlichen Geschwindigkeiten rotieren, könnte, abweichend von der Darstellung der Fig. 2, zwischen diesen ein Wälzlager vorgesehen sein. Denkbar ist aber auch, das zweite Rad 20 durch Eingriff mit den es umgebenden Planetenrädern 17 in einer zur Welle 12 koaxialen Position zu halten, selbst wenn zwischen dem zweite Rad 20 und der Welle 12 kein unmittelbarer Kontakt besteht.

An der in der Öffnung 40 des Deckels 37 freiliegenden Spitze der Kolbenstange 28 ist eine Gewindebohrung 46 gebildet. So ist es beim Stillstand des Getriebes möglich, durch eine Öffnung der Riemenscheibe 8 hindurch ein Werkzeug in die Kolbenstange 28 einzuschrauben, um sie, wenn erforderlich, auch von Hand betätigen zu können.

Fig. 3 zeigt einen Schnitt durch das Planetengetriebe gemäß einer vereinfachten Ausgestaltung. Der Stellzylinder 29 ist hier derselbe wie in der Ausgestaltung der Fig. 2 - dies ermöglicht einerseits eine rationelle Fertigung beider Ausgestaltungen je nach Wunsch eines Kunden und andererseits bei Bedarf eine kostengünstige Aufrüstung von der einfachen Ausgestaltung der Fig. 3 zu der komfortableren der Fig. 2 an einem bereits an den Kunden ausgelieferten Mähdrescher - allerdings sind hier die Versorgungsleitungen 43, 45 für die Versorgung des Stellzylinders 29 mit Hydraulikfluid entfallen, und die Kammern 42, 44 kommunizieren mit der Umgebung, wobei in die Wand 32 eingeschraubte Filtereinsätze 47 dazu dienen, einen Druckausgleich zwischen den Kammern 42,44 und der Umgebung sicherzustellen und dabei Staub und Schmutz aus der Umgebung von den Kammern 42, 44 fernzuhalten. An das durch die Öffnung 40 des Deckels 37 ins Freie ragende Ende der Kolbenstange 28 ist hier ein Hebel 48 angeschraubt, so dass die Kolbenstange 28 mithilfe des Hebels 48 von Hand, ohne zeitraubenden Werkzeugeinsatz, nach links gezogen werden kann. Der Hebel 48 bleibt während des Betriebs des Getriebes an der Kolbenstange verschraubt, so dass ein kurzes Anhalten zum Umschalten des Getriebes genügt.

Eine Federkapsel 49 ist hier anstelle des in Fig. 2 gezeigten Verschlussstopfens 39 in die Öffnung 39 in der Wand 32 des Planetenträgers 30 eingeschraubt. Eine federbeaufschlagte Kugel 50 der Federkapsel 49 greift in eine von zwei Kerben 53 der Kolbenstange 28 ein und hält so die Schaltgabel 27 in ihrer gezeigten Position lösbar verrastet. Wenn die Kolbenstange 28 nach links vorgezogen wird, um die Schaltmuffe 22 am Sonnenrad 11 in Eingriff zu bringen, verschiebt sich die andere Kerbe 53 der Kolbenstange 28 vor die Federkapsel 49, so dass durch Einrasten von deren Kugel 50 in die zweite Kerbe 53 eine zweite Rastposition festgelegt und das erfolgreiche Umschalten des Getriebes für einen an der Kolbenstange 28 ziehenden Benutzer fühlbar ist.

### Bezugszeichen

- 1: vorderes Rad
- 2: hinteres Rad
- 3: Karosserie
- 4: Motor
- 5: Dreschtrommel
- 6: Erntevorsatz
- 7: Riemen
- 8: Riemenscheibe
- 9: Schraube
- 10: Planetengetriebe
- 11: Sonnenrad
- 12: Welle
- 13: Flansch
- 14: Riemenscheibe
- 15: Wälzlager
- 16: Innenverzahnung
- 17: Planetenrad
- 18: Verzahnung
- 19: Verzahnung
- 20: Sonnenrad
- 21: Innenverzahnung
- 22: Schaltmuffe
- 23: Innenverzahnung
- 24: Zahn
- 25: Zahn
- 26: Nut
- 27: Schaltgabel
- 28: Kolbenstange
- 29: Stellzylinder
- 30: Planetenträger
- 31: Boden
- 32: Wand
- 33: Wälzlager
- 34: Vertiefung
- 35: Wälzlager
- 36: Vorsprung
- 37: Deckel
- 38: Öffnung
- 39: Nachfüllöffnung
- 40: Öffnung
- 41: Dichtung
- 42: Arbeitskammer
- 43: Versorgungsleitung
- 44: Arbeitskammer
- 45: Versorgungsleitung
- 46: Gewindebohrung
- 47: Filtereinsatz
- 48: Hebel
- 49: Federkapsel
- 50: Kugel
- 51: Fahrerstand
- 52: Bedienelement
- 53: Kerbe

## Patentansprüche

1. Planetengetriebe mit einer Welle (12), einem ersten Sonnenrad (11), einer Schaltmuffe (22), die in einer ersten Stellung das erste Sonnenrad (11) an die Welle (12) koppelt und in einer zweiten Stellung eine Drehung des ersten Sonnenrades (11) gegen die Welle (12) zulässt, einem Planetenträger (30) und mehreren Planetenrädern (17), die mit dem ersten Sonnenrad (11) und einem zweiten Rad (20) kämmen, wobei in der zweiten Stellung die Schaltmuffe (22) das zweite Rad (20) an die Welle (12) koppelt, **dadurch gekennzeichnet, dass** eine an der Schaltmuffe (22) angreifende Schaltgabel (27) an dem Planetenträger (30) axial beweglich angebracht ist.

2. Planetengetriebe nach Anspruch 1, **dadurch gekennzeichnet, dass** der Planetenträger (30) drehfest angeordnet ist.

3. Planetengetriebe nach einem der vorhergehenden Ansprüche, **dadurch gekennzeichnet, dass** am Planetenträger (30) ein Aktuator, insbesondere ein Stellzylinder (29), zum Verstellen der Schaltgabel (27) angeordnet ist.

4. Planetengetriebe nach einem der vorhergehenden Ansprüche, **dadurch gekennzeichnet, dass** der Planetenträger (30) Rastmittel (49) zum lösbaren Verrasten der Schaltgabel (27) in einer der ersten und/oder der zweiten Stellung der Schaltmuffe (22) entsprechenden Position aufweist.

5. Planetengetriebe nach einem der vorhergehenden Ansprüche, **dadurch gekennzeichnet, dass** der Planetenträger (30) eine Ölwanne bildet, in die wenigstens eines der Planetenräder (17) eintaucht.

6. Planetengetriebe nach Anspruch 5, **dadurch gekennzeichnet, dass** der Planetenträger (30) schalenförmig ausgebildet ist und zusammen mit einem an einen Rand der Schale anschließenden Deckel (37) die Ölwanne bildet.

7. Planetengetriebe nach Anspruch 5 oder 6, soweit auf Anspruch 2 rückbezogen, **dadurch gekennzeichnet, dass** die Planetenräder (17) auf einem Kreis um die Welle (12) angeordnete Achsen haben und dass die Achse eines der Planetenräder (17) durch den tiefsten Punkt des Kreises verläuft.

8. Planetengetriebe nach einem der vorhergehenden Ansprüche, **dadurch gekennzeichnet, dass** der Planetenträger (30) schalenförmig ausgebildet ist und zusammen mit einem an einen Rand der Schale anschließenden Deckel (37) eine Kapsel bildet, die die Sonnen- und Planetenräder (11, 17) umschließt.

9. Planetengetriebe nach Anspruch 8, **dadurch gekennzeichnet, dass** die Kapsel eine Öffnung (40) aufweist, an der ein sich in axialer Richtung erstreckender Stift (28, 47) der Schaltgabel (27) herausgeführt ist.

10. Planetengetriebe nach einem der vorhergehenden Ansprüche, **dadurch gekennzeichnet, dass** die Schaltmuffe (22) sich um die Welle (12) herum erstreckt und Schaltmuffe (22) und die Welle (12) ineinandergreifende Verzahnungen (21) aufweisen, die in axialer Richtung gegeneinander verschiebbar sind.

11. Planetengetriebe nach einem der vorhergehenden Ansprüche, **dadurch gekennzeichnet, dass** in der ersten Stellung der Schaltmuffe (22) das zweite Rad (20) gegen die Welle (12) drehbar ist.

12. Planetengetriebe nach einem der vorhergehenden Ansprüche, **dadurch gekennzeichnet, dass** das zweite Rad (20) ein zweites Sonnenrad ist und die Planetenräder (17) Stufenräder mit einer mit dem ersten Rad (11) kämmenden ersten Verzahnung (18) und einer mit dem zweiten Rad (20) kämmenden zweiten Verzahnung (19) sind.

13. Mähdrescher mit einem Planetengetriebe nach einem der vorhergehenden Ansprüche.

14. Mähdrescher mit einem Planetengetriebe nach Anspruch 3, **dadurch gekennzeichnet, dass** ein Bedienelement (52) zum Ansteuern des Aktuators an einem Fahrerstand (51) des Mähdreschers vorgesehen ist.

## Claims

1. A planetary gear having a shaft (12), a first sun wheel (11), a sliding clutch (22) which in a first position couples the first sun wheel (11) to the shaft (12) and which in a second position allows the first sun wheel (11) to rotate against the shaft (12), a planetary carrier (30) and a plurality of planetary wheels (17) which mesh with the first sun wheel (11) and a second wheel (20), wherein in the second position, the sliding clutch (22) couples the second wheel (20) to the shaft (12), **characterized in that** a shift fork (27) acting on the sliding clutch (22) is attached to the planetary carrier (30) in an axially movable manner.

2. The planetary gear as claimed in claim 1, **characterized in that** the planetary carrier (30) is secured against rotation.

3. The planetary gear as claimed in one of the preceding claims, **characterized in that** an actuator, in particular a positioning cylinder (29), is disposed on the planetary carrier (30) in order to move the shift fork (27).

4. The planetary gear as claimed in one of the preceding claims, **characterized in that** the planetary carrier (30) comprises catch means (49) for releasably locking the shift fork (27) in a position which corresponds to the first and/or the second position of the sliding clutch (22).

5. The planetary gear as claimed in one of the preceding claims, **characterized in that** the planetary carrier (30) forms an oil sump in which at least one of the planetary wheels (17) is immersed.

6. The planetary gear as claimed in claim 5, **characterized in that** the planetary carrier (30) is dish-shaped and forms the oil sump together with a cover (37) which is attached to an edge of the dish.

7. The planetary gear as claimed in claim 5 or claim 6, insofar as it is dependent on claim 2, **characterized in that** the planetary wheels (17) have axes disposed in a circle around the shaft (12) and **in that** the axle of one of the planetary wheels (17) passes through the lowest point of the circle.

8. The planetary gear as claimed in one of the preceding claims, **characterized in that** the planetary carrier (30) is dish-shaped and, together with a cover (37) which is attached to an edge of the dish, forms a case which encloses the sun wheel and the planetary wheels (11, 17).

9. The planetary gear as claimed in claim 8, **characterized in that** the case has an opening (40) out of which a pin (28, 47) of the shift fork (27) which extends in the axial direction is guided.

10. The planetary gear as claimed in one of the preceding claims, **characterized in that** the sliding clutch (22) extends around the shaft (12) and comprises gear teeth (21) which interengage with the sliding clutch (22) and the shaft (12) and which are displaceable with respect to each other in the axial direction.

11. The planetary gear as claimed in one of the preceding claims, **characterized in that** in the first position of the sliding clutch (22), the second wheel (20) can be rotated against the shaft (12).

12. The planetary gear as claimed in one of the preceding claims, **characterized in that** the second wheel (20) is a second sun wheel and the planetary wheels (17) are step wheels with a first set of gear teeth (18) which mesh with the first wheel (11) and a second set of gear teeth (19) which mesh with the second wheel (20).

13. A combine harvester with a planetary gear as claimed in one of the preceding claims.

14. The combine harvester with a planetary gear as claimed in claim 3, **characterized in that** an operating element (52) is provided at a driver's position (51) of the combine harvester in order to control the actuator.

## Revendications

1. Engrenage planétaire comprenant un arbre (12), un premier pignon solaire (11), un manchon d'accouplement (22) qui, dans une première position, accouple le premier pignon solaire (11) à l'arbre (12) et, dans une seconde position, autorise une rotation du premier pignon solaire (11) par rapport à l'arbre (12), un porte-planétaire (30) et plusieurs pignons planétaires (17) qui s'engrènent avec le premier pignon solaire (11) et un second pignon (20), dans la seconde position le manchon d'accouplement (22) accouplant le second pignon (20) à l'arbre (12), **caractérisé en ce qu'**une fourchette de commande (27) agissant sur le manchon d'accouplement (22) est montée avec une mobilité axiale sur le porte-planétaire (30).

2. Engrenage planétaire selon la revendication 1, **caractérisé en ce que** le porte-planétaire (30) est monté solidaire en rotation.

3. Engrenage planétaire selon une des revendications précédentes, **caractérisé en ce que** sur le porte-planétaire (30) est disposé un actionneur, en particulier un vérin de réglage (29), pour déplacer la fourchette de commande (27).

4. Engrenage planétaire selon une des revendications précédentes, **caractérisé en ce que** le porte-planétaire (30) comporte des moyens d'encliquetage (49) pour réaliser un verrouillage amovible de la fourchette de commande (27) dans une position correspondant à la première et/ou à la seconde position du manchon d'accouplement (22).

5. Engrenage planétaire selon une des revendications précédentes, **caractérisé en ce que** le porte-planétaire (30) forme un carter d'huile dans lequel plonge au moins un des pignons planétaires (17).

6. Engrenage planétaire selon la revendication 5, **caractérisé en ce que** le porte-planétaire (30) est conformé en cuvette et forme, conjointement avec un couvercle (37) se raccordant à un bord de la cuvette, le carter d'huile.

7. Engrenage planétaire selon la revendication 5 ou 6, sous réserve qu'elles se réfèrent à la revendication 2, **caractérisé en ce que** les pignons planétaires (17) possèdent des axes disposés en cercle autour de l'arbre (12) et **en ce que** l'axe d'un des pignons planétaires (17) passe par le point le plus bas du cercle.

8. Engrenage planétaire selon une des revendications précédentes, **caractérisé en ce que** le porte-planétaire (30) est conformé en cuvette et forme, conjointement avec un couvercle (37) se raccordant à un bord de la cuvette, une capsule qui entoure les pignons solaires et planétaires (11, 17).

9. Engrenage planétaire selon la revendication 8, **caractérisé en ce que** la capsule comporte une ouverture (40) au niveau de laquelle sort une tige (28, 47), s'étendant dans la direction axiale, de la fourchette de commande (27).

10. Engrenage planétaire selon une des revendications précédentes, **caractérisé en ce que** le manchon d'accouplement (22) s'étend autour de l'arbre (12), et le manchon d'accouplement (22) et l'arbre (12) comportent des dentures mutuellement engrenées (21) qui sont déplaçables l'une par rapport à l'autre dans la direction axiale.

11. Engrenage planétaire selon une des revendications précédentes, **caractérisé en ce que**, dans la première position du manchon d'accouplement (22), le second pignon (20) peut tourner par rapport à l'arbre (12).

12. Engrenage planétaire selon une des revendications précédentes, **caractérisé en ce que** le second pignon (20) est un second pignon solaire et les pignons planétaires (17) sont des pignons étagés comprenant une première denture (18) s'engrenant avec le premier pignon (11) et une seconde denture (19) s'engrenant avec le second pignon (20).

13. Moissonneuse-batteuse comprenant un engrenage planétaire selon une des revendications précédentes.

14. Moissonneuse-batteuse comprenant un engrenage planétaire selon la revendication 3, **caractérisée en ce qu'**un élément d'actionnement (52) est prévu au niveau d'un poste de conduite (51) de la moissonneuse-batteuse pour commander l'actionneur.
